# EUROPÄISCHE PATENTSCHRIFT

(11) **EP 0 327 863 B1**
(45) Veröffentlichungstag und Bekanntmachung des Hinweises auf die Patenterteilung: **28.04.1993**
(21) Anmeldenummer: 89100987.0
(22) Anmeldetag: 20.01.1989
(51) Int. Cl.: B60D 1/02

(54) **Vorrichtung zum Aus- und Einschalten des Spiels zwischen den miteinander zu verbindenen Kupplungsteilen einer Anhängerkupplung**
Device for taking up play between connected coupling parts of a trailer hitch
Dispositif pour rattraper le jeu entre les éléments d'accouplement à relier entre eux dans un attelage de remorque

(30) Priorität: 12.02.1988 DE 3804454
(43) Veröffentlichungstag der Anmeldung: 16.08.1989
(73) Patentinhaber: ROCKINGER Spezialfabrik für Anhängerkupplungen GmbH & Co., D-80904 München (DE)
(72) Erfinder: Glässner, Ralf, Dipl.-Ing., D-8000 München 50 (DE); Raaber, Alfons, D-8000 München 45 (DE)
(74) Vertreter: Weickmann, Heinrich, Dipl.-Ing.

(56) Entgegenhaltungen:
- DE-A- 2 458 948
- DE-A- 2 529 303
- DE-C- 943 441
- DE-C- 2 912 277
- US-A- 3 209 921

## Beschreibung

Die Erfindung betrifft eine Vorrichtung zum Aus- und einschalten des Spiels zwischen den miteinander zu verbindenden Kupplungsteilen, z. B. Kupplungsbolzen und Zugöse, einer Anhängerkupplung, umfassend einen in einem Zylinder beweglichen Kolben und einen von diesem Kolben beaufschlagten Anlagekörper, wobei der Anlagekörper durch eine Führungsstange in einer Bohrung einer einen Kupplungskörper tragenden Zugstange geführt ist, diese Zugstange ihrerseits in einem an einem Fahrzeug befestigbaren Zugstangenlager geführt ist und eine den Zylinder umfassende Baueinheit an diesem Zugstangenlager derart geführt ist, daß die Zylinderachse des Zylinders annähernd in Flucht mit der Achse der Führungsstange liegt.

Eine solche Vorrichtung ist aus der DE-C 25 29 303 und aus der DE-C 29 12 277 bekannt. Bei den bekannten Anordnungen ist die Führungsstange einstückig mit dem Anlagekörper ausgeführt und liegt unmittelbar an dem Kolben an. Es besteht die Gefahr, daß bei nicht exakt fluchtender Anordnung der Führungsstange und des Kolbens Querkräfte und/oder Momente in den Kolben eingeleitet werden. Diese Querkräfte und/oder Momente können zu vorzeitiger Abnutzung der Führungs- und Dichtungsmittel zwischen dem Kolben und dem Zylinder führen. Die Abnutzung der Dichtungsmittel kann weiter dazu führen, daß Luft in einen Hochdruckzylinderraum gelangt, dessen Flüssigkeitsfüllung im Fahrbetrieb auf den Kolben wirkt und die Spielfreiheit gewährleistet. Wenn solche Luft in den Hochdruckzylinderraum gelangt, so wird die Spielfreiheitsfunktion beeinträchtigt.

Der Erfindung liegt die Aufgabe zugrunde, eine Vorrichtung der eingangs bezeichneten Art so auszugestalten, daß keine wesentlichen Querkräfte und/oder Momente von dem Anlagekörper über die Führungsstange auf den Kolben übertragen werden können.

Zur Lösung dieser Aufgabe wird erfindungsgemäß vorgeschlagen, daß zwischen dem Kolben und dem kolbennahen Ende der Führungsstange ein Druckstab vorgesehen ist, welcher über je ein Kugelgelenk mit dem Kolben und der Führungsstange in Eingriff steht.

Die Kugelgelenke können auf einfachste Weise so ausgebildet sein, daß der Druckstab an beiden Enden je eine Teilkugelfläche trägt und daß diese Teilkugelflächen mit je einer Kugelpfanne des Kolbens und der Führungsstange in Eingriff stehen.

Um den Innenraum des Zylinders gegen Eindringen von Verunreinigungen zu schützen, kann man eine Ausbildung derart wählen, daß der Druckstab eine Zylinderabschlußwand des Zylinders durchsetzt und daß ein Balgen mit seinem einen Ende an die Abschlußwand angeschlossen ist und mit seinem anderen Ende den Druckstab umschließt. Bei dieser Ausbildung kann der Balgen dazu herangezogen werden, um den Druckstab in Flucht mit der Führungsstange zu halten, wenn das eine oder andere Kugelgelenk gelöst ist. Dies kann entweder durch eine entsprechende Steifigkeit des Balgens erreicht werden oder auch dadurch, daß der Balgen an der Bohrung der Zugstange anliegt.

Die erfindungsgemäße Lösung ist insbesondere dann vorteilhaft, wenn an dem Zugstangenlager ein Zwischengehäuse angeflanscht ist, welches eine die Zugstange mit dem Zugstangenlager verspannende Zugstangenmutter umschließt und wenn an dem Zwischengehäuse ein den Zylinder aufnehmendes Hauptgehäuse angeflanscht ist. Bei einer solchen Ausführungsform besteht in hohem Maße die Gefahr von Fluchtfehlern, so daß der den beiden Enden kugelgelenkig anliegende Druckstab hier besonders wichtig ist.

Die Erfindung ist weiterhin insbesondere in Verbindung mit einer aus dem oben erwähnten Stand der Technik bekannten Lösung anwendbar, bei welcher der Kolben durch ein Stellgerät verstellbar ist und ein Hochdruckzylinderraum des Zylinders, welcher sich bei Spielausschaltung durch die Wirkung des Stellgeräts vergrößert, über ein Nachsaugventil, ein Schaltventil und gegebenenfalls ein Überdruckventil mit einem Druckmittelvorratsraum verbunden ist.

Die beiliegenden Figuren erläutern die Erfindung anhand eines Ausführungsbeispiels. Es stellen dar:
- Figur 1: eine Anhängerkupplung mit einer erfindungsgemäßen Vorrichtung zum Ein- und Ausschalten des Spiels zwischen einer Zugöse und einem Kupplungsbolzen;
- Figur 2: einen Längsschnitt durch die in der Figur 1 rechts gelegene Zylinder-Kolben-Baugruppe;
- Figur 3: eine Draufsicht auf die Baugruppe gemäß Figur 2 und

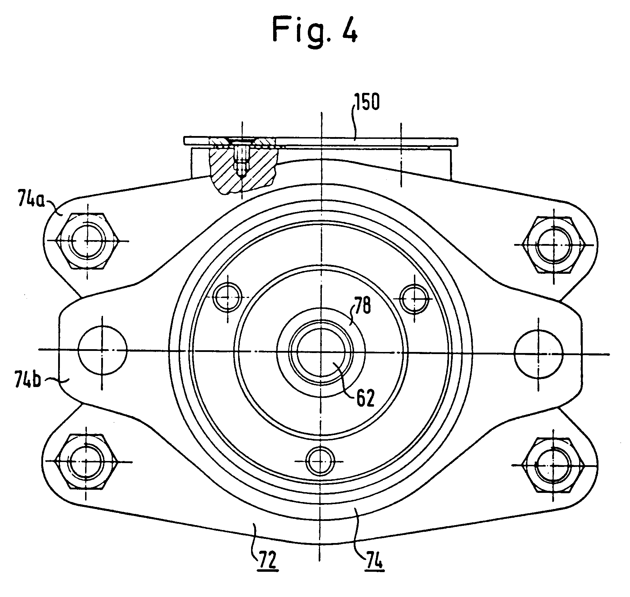

- Figur 4: eine Endansicht auf die Baugruppe gemäß Figuren 2 und 3 in Pfeilrichtung IV der Figur 3.

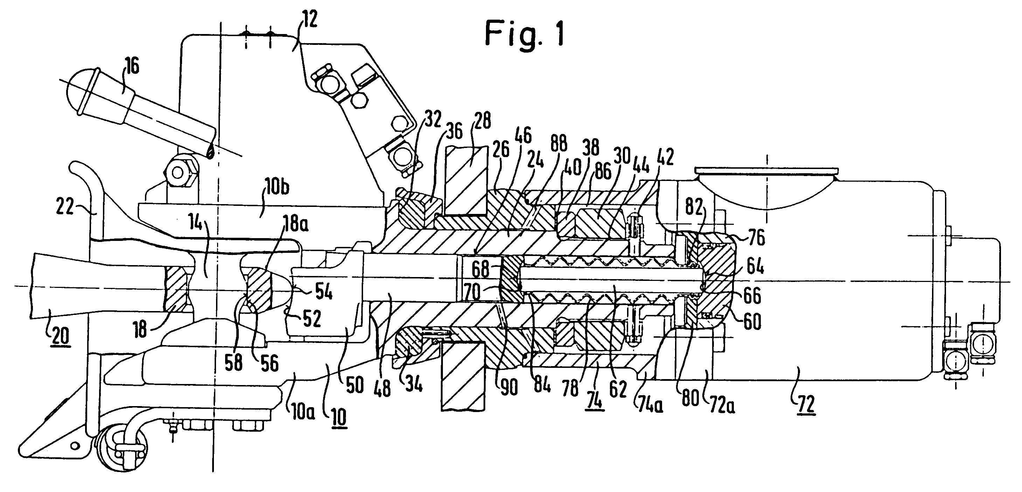

In Figur 1 erkennt man einen Kupplungskörper, der ganz al!gemein mit 10 bezeichnet ist. Dieser Kupplungskörper 10 umfaßt einen unteren Schenkel 10a und einen oberen Schenkel 10b. Auf dem oberen Schenkel 10b ist das Gehäuse 12 einer Kupplungsautomatik angeordnet. Zu dieser Kupplungsautomatik gehört ein Kupplungsbolzen 14, welcher durch nicht eingezeichnete Bohrungen der Schenkel 10a und 10b geführt ist. Dieser Kupplungsbolzen 14 befindet sich in Figur 1 in der Stellung "eingekuppelt" und kann durch Betätigen eines Betätigungshebels 16 nach oben zurückgezogen werden. Der Kupplungsbolzen 14 durchsetzt eine Zugöse 18 einer Anhängerdeichsel 20. Durch Einführen der Zugöse 18 in den Kupplungskörper 10 vermittels eines das Einführen erleichternden Kupplungsmauls 22 kann die Zugöse 18 in Flucht mit dem nach oben zurückgezogenen Kupplungsbolzen 14 gebracht werden. Der Kupplungsbolzen 14 wird dabei durch die Schrägfläche 18a der Zugöse 18 leicht angehoben und kann dann aus seiner nicht eingezeichneten oberen Haltestellung in die in Figur 1 gezeichnete Stellung herabfallen, in welcher er die Zugöse 18 durchsetzt und die Kupplung zwischen einem den Kupplungskörper 10 tragenden Zugfahrzeug und einem die Anhängerdeichsel 20 tragenden Anhänger herstellt. Der Aufbau solcher Anhängerkupplungen ist bekannt. Wie aus Figur 1 zu ersehen, besteht zwischen der Zugöse 18 und dem Kupplungsbolzen 14 ein gewisses Spiel. Dieses Spiel ist unvermeidbar, um das Einkuppeln zu ermöglichen und während der Fahrt gewisse Bewegungen der Anhängerdeichsel 20 gegenüber dem Kupplungskörper 10 zu ermöglichen. Andererseits besteht zur Vermeidung von Schlägen zwischen dem Kupplungsbolzen 14 und der Zugöse 18 ein Bedarf, das Spiel möglichst weitgehend zu unterdrücken. Die Unterdrückung dieses Spiels ist aus der DE-AS 25 02 944 und der DE-OS 25 29 303 an sich bekannt. Mit dieser Spielunterdrückung befaßt sich auch die vorIiegende Erfindung.

Der Kupplungskörper 10 weist eine Zugstange 24 auf. Diese Zugstange 24 ist in einem Zugstangenlager 26 gelagert, welches an einer Traverse 28 des Zugfahrzeugs angeflanscht ist. Die Zugstange 24 ist mit dem Zugstangenlager 26 durch eine Zugstangenmutter 30 verspannt. Diese Zugstangenmutter 30 zieht eine Schulterfläche 32 der Zugstange 24 gegen einen druckelastischen Abstützring 34, der sich über einen Teller 36 an dem in der Figur 1 linken Ende des Zugstangenlagers 26 abstützt. Die Zugstangenmutter 30 liegt über Zwischenringe 38 und 40 an dem in Figur 1 rechten Ende des Zugstangenlagers 26 an und ist durch eine Verschraubungssicherung 42 gegen Lösen von dem Gewinde 44 der Zugstange 24 gesichert. Die Zugstange 24 ist mit einer Zugstangenbohrung 46 ausgeführt. In der Zugstangenbohrung 46 ist eine Führungsstange 48 verschiebbar geführt, welche an ihrem in der Figur 1 linken Ende einen Anlagekörper 50, auch "Stop-Prisma" genannt, trägt. Dieser Anlagekörper 50 ist dazu bestimmt, mit einer Anlagefläche 52 gegen eine Gegenanlagefläche 54 der Zugöse 18 zur Anlage zu kommen und die Zugöse 18 mit einem Teilbereich 56 ihrer Innenumfangsfläche gegen einen Teilbereich 58 der Außenumfangsfläche des Kupplungsbolzens 14 anzudrükken, so daß das Spiel zwischen dem Kupplungsbolzen 14 und der Zugöse 18 im Fahrbetrieb unterdrückt ist.

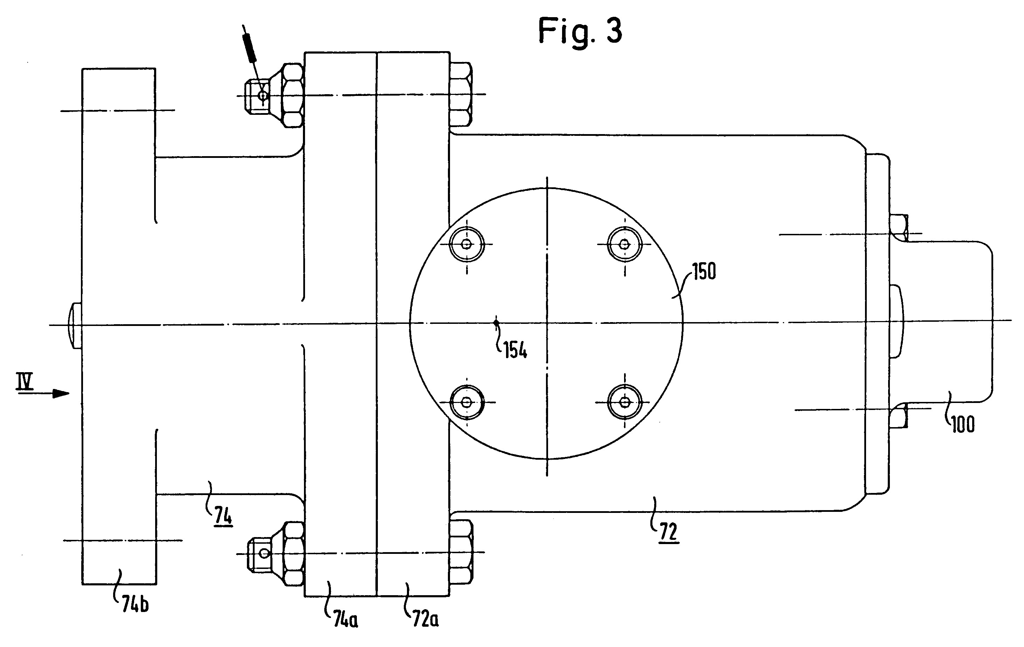

An der Führungsstange 48 greift ein Kolben 60 an, und zwar über einen Druckstab 62. Der Druckstab 62 weist an seinem in Figur 1 rechten Ende eine Teilkugelfläche 64 auf, welche in eine Kugelpfanne 66 des Kolbens 60 eingreift, und an seinem linken Ende eine Teilkugelfläche 68, welche in eine Kugelpfanne 70 der Führungsstange 48 eingreift. Durch Kraftausübung auf den Kolben 60 nach links wird die Führungsstange 48 nach links verschoben und der Anlagekörper zur Anlage gegen die Zugöse 18 gebracht. Der Kolben 60 ist in einem Hauptgehäuse 72 in noch näher zu beschreibender Weise untergebracht. Das Hauptgehäuse 72 ist mittels eines Hauptgehäuseflansches 72a an einem Zwischengehäuse 74 angeflanscht, das zu diesem Zweck einen Zwischengehäuseflansch 74a aufweist und seinerseits mit einem weiteren Zwischengehäuseflansch 74b (siehe Figur 3) an dem Zugstangenlager 26 angeflanscht ist.

Der Kolben 60 ist in einem Zylinder 76 geführt, welcher starr innerhalb des Hauptgehäuses 72 angeordnet ist. Das Zugstangenlager 26 ist starr an der Traverse 28 angeordnet. Der Zylinder 76 liegt damit gegenüber dem Zugstangenlager 26 starr fest. Die Zugstange 24 ist von der Kupplungsherstellung her gegenüber dem Zugstangenlager 26 zentriert und die Führungsstange 48 ist gegenüber der Zugstange 24 zentriert. Gleichwohl sind gewisse Fluchtungsfehler der Führungsstange 48 gegenüber der Zugstange 24 und insbesondere der Zugstange 24 gegenüber dem Zugstangenlager 26 nicht auszuschließen, insbesondere nach längerem Gebrauch der Kupplung. Andererseits ist, wie gesagt, der Zylinder 76 gegenüber dem Zugstangenlager 26 starr festgelegt. Fluchtungsfehler der Führungsstange 48 gegenüber dem Zugstangenlager 26 bedeuten also auch Fluchtungsfehler der Führungsstange 48 gegenüber dem Zylinder 76. Um nun zu verhindern, daß Fluchtungsfehler zwischen der Führungsstange 48 und dem Zylinder 76 zu Verklemmungen zwischen dem Kolben 60 und dem Zylinder 76 führen, ist zwischen der Führungsstange 48 und dem Kolben 60 der Druckstab 62 zwischengeschaltet, welcher über das Kugelgelenk 64, 66 mit dem Kolben 60 in Druckverbindung steht und über das Kugelgelenk 68, 70 mit der Führungsstange 48 in Druckverbindung steht. Dank dieser Kugelgelenke 64, 66 und 68, 70 zentriert sich der Druckstab 62 selbsttätig zwischen dem Kolben 60 und der Führungsstange 48. Es kann also keine Klemmwirkung zwischen dem Kolben 60 und dem Zylinder 76 eintreten. Der Kolben 60 kann, wie später noch zu erläutern sein wird, von dem Druckstab 62 in Figur 1 nach rechts abheben, so daß die fluchtende Lage des Druckstabes 62 gegenüber dem Kolben 60 und der Führungsstange 48 verloren gehen könnte.

Dies wird durch das Vorhandensein eines Balgens 78 verhindert. Der Balgen 78 ist einerseits an einer Endwand 80 des Zylinders 76 im Bereich eines Durchgangs 82 der Endwand 80 eingespannt, also mit dem Hauptgehäuse 72 an seinem einen Ende fest verbunden. Andererseits umschließt der Balgen 78 mit seinem linken Ende bei 84 den Druckstab 62. Dadurch ist der Druckstab 62 auch dann durch den Balgen 78 in Fluchtlage zu dem Kolben 60 und zu der Führungsstange 48 gehalten, wenn der Druckstab 62 mit dem Kolben 60 oder der Führungsstange 48 nicht mehr in druckübertragendem Eingriff steht. Der Balgen 78 kann an der Innenumfangsfläche der Zugstangenbohrung 46 anliegen, wie in Figur 1 dargestellt, so daß der Balgen 78 unabhängig von seiner Biegesteifigkeit den Druckstab 62 in Fluchtlage zu dem Kolben 60 und zu der Führungsstange 48 sichert. Darüberhinaus übernimmt der Balgen 78 eine Abdichtfunktion für den Innenraum des Zylinders 76, indem er einmal bei 72 an der Endwand 80 schmutzdichtend anliegt und andererseits bei 84 an dem Druckstab 62 schmutzdichtend anliegt. Der Raum 86 innerhalb des Zwischengehäuses 74 ist mit Fett gefüllt, das über Kanäle 88, 90 auch die Führung der Zugstange 24 in dem Zugstangenlager 26 und die Führung der Führungsstange 48 in der Zugstangenbohrung 46 schmiert. Dieses Fett ist durch die Endwand 80 am Eindringen in den Innenraum des Zylinders 76 gehindert.

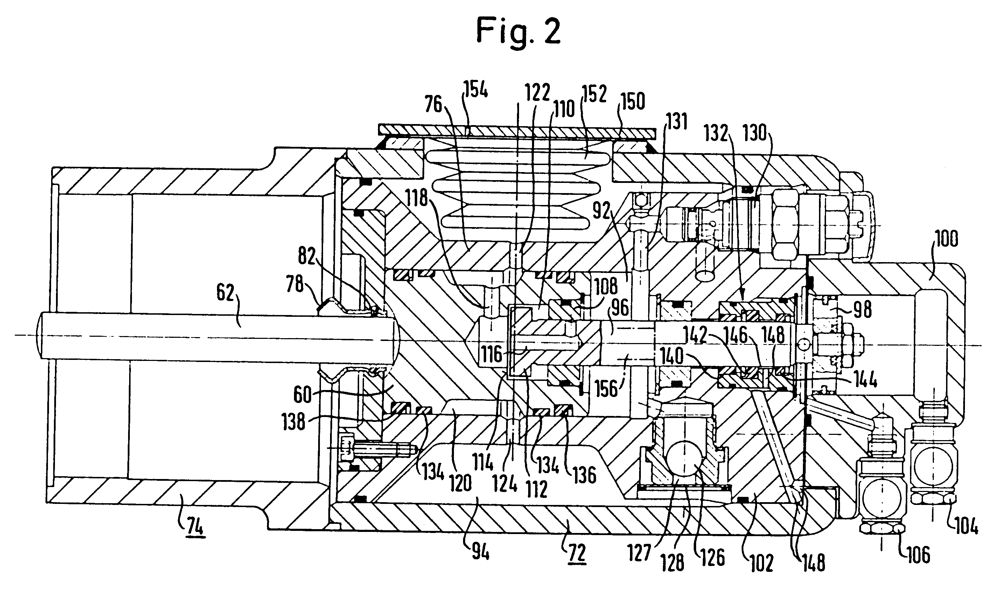

In Figur 2 erkennt man die Einzelheiten der Vorrichtung innerhalb des Hauptgehäuses 72.

Der Zylinder 76 ist, wie aus Figur 2 zu ersehen, innerhalb des Hauptgehäuses 72 aufgenommen und nimmt seinerseits den Kolben 60 auf. Der Kolben 60 bildet innerhalb des Zylinders 76 auf der in Figur 2 rechts gelegenen Seite des Kolbens einen Hochdruckzylinderraum 92. In einem radialen Zwischenraum zwischen dem Hauptgehäuse 72 und dem Zylinder 76 ist ein Druckmittelvorratsraum 94 gebildet. Der Kolben 60 ist mit einer Kolbenstange 96 verbunden, die ihrerseits mit einem pneumatischen Stellkolben 98 verbunden ist, welcher in einem pneumatischen Stellzylinder 100 aufgenommen ist. Der pneumatische Stellzylinder 100 ist auf einem Fortsatz 102 des Zylinders 76 oder im Gehäuse 72 befestigt. Der in dem pneumatischen Stellzylinder 100 rechts des Stellkolbens 98 gelegene Arbeitsraum ist mit einem Druckluftanschluß 104 verbunden, der links des Stellkolbens 98 gelegene Arbeitsraum ist mit einem Druckluftanschluß 106 verbunden. Die Druckluftanschlüsse 104, 106 sind über Schaltventile mit einer Druckluftversorgung verbunden, so daß wahlweise die eine oder die andere Seite des Stellkolbens 98 mit Druckluft beaufschlagt und die andere entlüftet werden kann. Die Kolbenstange 96 ist durch eine Dichtführung 108 in eine Schaltkammer 110 innerhalb des Kolbens 60 eingeführt und innerhalb der Schaltkammer 110 verbreitert, wobei die Verbreiterung 112 mit der Dichtführung 108 einerseits und der Endfläche 114 der Schaltkammer 110 andererseits Anschlagpaarungen bildet, welche die beiden Endlagen der Kolbenstange 96 gegenüber dem Kolben 60 definieren. Die Schaltkammer 110 ist durch ein Kanalsystem 116 innerhalb der Kolbenstange 96 mit dem Hochdruckzylinderraum 92 verbindbar. Wenn die Kolbenstange 96 die linke Stellung gegenüber dem Kolben 60 einnimmt, so ist das Kanalsystem 116 abgeschlossen; nimmt dagegen die Kolbenstange 96 die rechte Endstellung innerhalb des Kolbens 60 ein, so ist das Kanalsystem 116 offen, d.h. die Schaltkammer 110 ist mit dem Hochdruckzylinderraum 92 verbunden. Die Schaltkammer 110 steht über eine Radialbohrung 118 des Kolbens 60 in ständiger Verbindung mit einer Ringkammer 120, welche durch eine Eindrehung des Kolbens 60 und den Zylinder 76 begrenzt ist. Diese Ringkammer 120 ihrerseits steht über einen oberen Radialkanal 122 des Zylinders 76 und einen unteren Radialkanal 124 des Zylinders 76 in Verbindung mit dem Druckmittelvorratsraum 94.

Zwischen dem Druckmittelvorratsraum 94 und dem Hochdruckzylinderraum 92 ist weiterhin ein Nachsaugventil 126 angeordnet, das sich im tiefsten Bereich des Hochdruckzylinderraums 92 befindet und zum Hochdruckzylinderraum 92 hin öffnet. Dem Nachsaugventil 126 ist ein Filter 128 vorgeschaltet.

Schließlich ist zwischen dem Hochdruckzylinderraum 92 und dem Druckmittelvorratsraum 94 ist ein Überdruckventil 130 angeordnet, welches bei Überschreiten eines vorbestimmten Druckes innerhalb des Hochdruckzylinderraums 92 zum Druckmittelvorratsraum 94 hin öffnet.

Die Kolbenstange 96 ist durch ein Trenndichtungssystem 132 hindurchgeführt, so daß der Hochdruckzylinderraum 92 von dem druckluftbeaufschlagten Arbeitsraum auf der linken Seite des Stellkolbens 98 getrennt ist.

Die so weit beschriebene Vorrichtung arbeitet wie folgt:

Wenn die Kupplung in den eingekuppelten Zustand gemäß Figur 1 gebracht wird, so wird, gesteuert durch den Handbetätigungshebel 16, mit zeitlicher Verzögerung Druckluft an der rechten Seite des Stellkolbens 98 angelegt, so daß der Ste!lkolben nach links gespannt wird. Gleichzeitig wird die linke Seite des Stellkolbens 98 über den Druckluftanschluß 106 entlüftet. Durch den nach links vorgespannten Stellkolben 98 wird die Kolbenstange 96 nach links verschoben in die Schaltkammer 110 hinein, so daß das Kanalsystem 116, wie in Figur 2 gezeigt, verschlossen wird. Die Kolbenstange 96 schlägt mit ihrer Verbreiterung 112 gegen den Boden 114 der Schaltkammer 110 an und sucht, den Kolben 60 nach links zu verschieben. Der Kolben 60 wirkt über den Druckstab 62 auf die Führungsstange 48 ein und diese legt sich mit ihrer Fläche 52 gegen die Fläche 54 der Zugöse 18 an. Die Kraftwirkung des Stellkolbens 98 reicht normalerweise nicht aus, um die Flächenbereiche 56 und 58 der Zugöse 18 und des Kupplungsbolzens 14 in Eingriff zu bringen. Wenn jedoch das die Kupplung tragende Zugfahrzeug anfährt und eine Zugwirkung auf die Zugdeichsel 20 des nachlaufenden Anhängers ausübt, so legen sich die Flächenbereiche 56 und 58 aneinander an. Der Anlagekörper 50 folgt dann unter der Kraftwirkung des Stellkolbens 98 in Figur 1 nach links, so daß die Flächen 52 und 54 des Anlagekörpers 50 bzw. der Zugöse 18 gegen einander zur Anlage kommen. Dabei bewegt sich der Kolben 60 nach links und der Hochdruckzylinderraum 92 wird vergrößert. Bei dieser Vergrößerung des Hochdruckzylinderraums 92 wird Druckflüssigkeit, nämlich Hydrauliköl, über das Nachsaugventil 126 von dem Druckmittelvorratsraum 94 in den Hochdruckzylinderraum 92 eingesaugt und der Hochdruckzylinderraum 92 vollständig gefüllt. Tritt nun ein Lastwechsel ein, etwa dann, wenn das die Kupplung tragende Zugfahrzeug gebremst wird und der Anhänger mit der Deichsel 20 auf das Zugfahrzeug aufläuft, so verbleibt der Anlagekörper 50 in der in Figur 1 dargestellten Stellung, weil sich der Hochdruckzylinderraum 92 über das als Rückschlagventil wirkende Nachsaugventil 126 nicht mehr entleeren kann. Dies bedeutet, daß während des normalen Fahrbetriebs, unabhängig von etwaigen Lastwechse!n, der Kupplungsbolzen 14 mit seinem Flächenbereich 58 in ständiger Anlage mit dem Flächenbereich 56 der Zugöse 18 gehalten wird. Damit ist die Kupplung spielfrei.

Wenn ausgekuppelt werden soll, so muß, bevor der Kupplungsbolzen 14 in Figur 1 nach oben aus der Zugöse 18 herausfahren kann, die Kraftwirkung aufgehoben werden, welche bis dahin von dem Kolben 60 über den Druckstab 62, die Führungsstange 48 und den Anlagekörper 50 auf die Zugöse 18 ausgeübt worden ist. Es wird deshalb, gesteuert durch den Handbetätigungshebel 16,der Arbeitsraum auf der rechten Seite des Stellkolbens 98 entlüftet und der Arbeitsraum auf der linken Seite des Stellkolbens 98 an Druckluft gelegt. Dann bewegt sich in der Figur 2 der Stellkolben 98 und mit ihm die Kolbenstange 96 nach rechts. Bevor die Kolbenstange 96 ihre rechte Endlage gegenüber dem Kolben 60 erreicht, tritt das Kanalsystem 116 in Verbindung mit dem Hochdruckzylinderraum 92, so daß der Hochdruckzylinderraum 92 über die Schaltkammer 110 und die Radialbohrung 118 in Verbindung mit der Ringkammer 120 und damit über die Bohrungen 122, 124 in Verbindung mit dem Druckmittelvorratsraum 94 tritt. Damit kann sich nunmehr der Hochdruckzylinderraum 92 zum Druckmittelvorratsraum 94 hin entleeren, d.h. der Stellkolben 98 kann auf seinem weiteren Weg den Kolben 60 nach rechts mitnehmen, so daß die Zugöse 18 wieder Spiel gegenüber dem Kupplungsbolzen 14 erhält. Nunmehr kann der Kupplungsbolzen 14 nach oben gehen und somit den Auskuppelvorgang beenden.

Tritt während des normalen Fahrbetriebs, d.h. in dem Zustand gemäß den Figuren 1 und 2, im Hochdruckzylinderraum 92 ein vorbestimmter Druck auf, der zu einer Beschädigung des mechanischen Aufbaues führen könnte, etwa weil die Zugdeichsel 20 einen großen Pendelausschlag gegenüber dem Kupplungskörper 10 ausführt und der Aniagekörper 50 deshalb in der Figur 2 nach rechts gedrückt wird, so öffnet das Überdruckventil 130, so daß ein Teil der Füllung des Hochdruckzylinderraums 92 in den Druckmittelvorratsraum 94 hinausgedrückt wird.

Der Kolben 60 ist in dem Zylinder 76 durch Laufringe 134 geführt und durch ein Dichtungssystem abgedichtet. Das Dichtungssystem besteht aus einer hochdrucknahen Primärdichtung 136 und einer atmosphärenahen Sekundärdichtung 138. Auf der rechten Seite der Primärdichtung 136 herrscht der Druck des Hochdruckzylinderraums 92, auf der linken Seite der Sekundärdichtung 138 herrscht Atmosphärendruck. Zwischen der Primärdichtung 136 und der Sekundärdichtung 138 befindet sich die Ringkammer 120, welche über die Radialbohrungen 122, 124 mit dem Druckmittelvorratsraum 94 in Verbindung steht. Wenn bei der Vergrößerung des Hochdruckzylinderraums 92 eine Sogwirkung von dem Hochdruckzylinderraum 92 ausgeht, so kann keine Luft in den Hochdruckzylinderraum 92 eingesogen werden, weil selbst im Falle eines Leckens der Primärdichtung 136 nur Druckflüssigkeit aus dem Ringraum 120 über die Primärdichtung 136 hinweg angesaugt wird, nicht aber Atmosphärenluft. Sollte aus irgendwelchen Gründen ein Einlecken von Atmosphärenluft über die Sekundärdichtung hinweg erfolgen, so gelangt diese Luft lediglich in den Ringraum 120 und von diesem in den Druckmittelvorratsraum 94, nicht aber in den Hochdruckzylinderraum 92. Es besteht also keine Gefahr, daß unbeabsichtigterweise Luft in den Hochdruckzylinderraum 92 gelangt und dadurch die Spielausgleichsfunktion in Frage gestellt wird, für welche die Inkompressibilität der Füllung des Hochdruckzylinderraums 92 wesentliche Voraussetzung ist.

Das Trenndichtungssystem 132 sorgt ebenfalls dafür, daß keine Luft in den Hochdruckzylinderraum 92 gelangen kann. Dieses Trenndichtungssystem umfaßt neben einer Führungsbuchse 140 eine hochdruckraumnahe Trenndichtung 142 und eine dem pneumatischen Stellkolben nahe Trenndichtung 144. Zwischen diesen Trenndichtungen 142, 144 ist ein ringförmiger Zwischenraum 146 ausgebildet, welcher über ein Kanalsystem 148 mit Atmosphäre verbunden ist. Der auf der linken Seite des Stellkolbens 98 auftretende Luftdruck gelangt damit im Falle eines Undichtwerdens der Trenndichtung 144 nur bis in den Zwischenraum 146 und von dort zur Atmosphäre. Ein Eindringen von Druckluft in den Hochdruckzylinderraum 92 und damit ein Aufschäumen des Druckmittels in dem Hochdruckzylinderraum 92 ist ausgeschlossen. Es ist damit auch von dieser Seite her eine Luftanreicherung des Druckmittels in dem Hochdruckzylinderraum 92 und damit ein Unwirksamwerden des Spielausgleiches infolge Kompressibilität der Füllung des Hochdruckzylinderraums 92 ausgeschlossen. Etwaiges Kondenswasser, welches sich in dem Zwischenraum 146 ansammeln könnte, läuft durch das Kanalsystem 148 ab, da dieses stetig nach unten verläuft.

Die Druckluftanschlüsse 106 und 104 liegen im tiefsten Bereich des pneumatischen Stellzylinders 100. Die Kanäle, welche diese Druckluftanschlüsse 104, 106 mit dem Stellzylinder 100 verbinden, sind ebenfalls stetig nach unten geneigt, so daß auch dort sich etwa ansammelndes Kondenswasser stetig abläuft und ausgeblasen wird.

Wenn der Kolben 60 beim Öffnen der Kupplung nach rechts bewegt wird, so verkleinert sich der Hochdruckzylinderraum 92 bis auf annähernd das Volumen NUll. Dies bedeutet, daß praktisch die gesamte Füllung des Hochdruckzylinderraums 92 in den Druckmittelvorratsraum 94 hinaus entleert wird und beim erneuten Einkuppeln der Hochdruckzylinderraum 92 vom Druckmittelvorratsraum 94 her über das Nachsaugventil 126 neu gefüllt wird. Selbst wenn sich also in dem Hochdruckzylinderraum 92 aus irgendwelchen Gründen Luft angesammelt haben sollte, so wird diese Luft bei jedem Auskuppelvorgang aus dem Hochdruckzylinderraum 92 ausgetrieben und beim darauffolgenden Einkuppelvorgang neues, luftfreies Druckmittel in den Hochdruckzylinderraum 92 eingesaugt. Das durch das Nachsaugventil 126 angesaugte neue Druckmittel ist deshalb luftfrei, weil sich in dem Druckmittelvorratsraum 94 etwa befindliche Luft in den höchstgelegenen Bereichen des Druckmittelvorratsraums 94 ansmmelt, das Nachsaugventil 126 aber, wie in Figur 2 dargestellt, in den tiefstliegenden Bereichen des Hochdruckzylinderraums 92 einerseits und des Druckmittelvorratsraums 94 andererseits untergebracht ist.

Schmutzteilchen oder von der Fertigung herrührende Späne werden bei der Verkleinerung des Hochdruckzylinderraums 92 ebenfalls in den Druckmittelvorratsraum 94 ausgetrieben. Bei der erneuten Füllung des Hochdruckzylinderraums 92 können dank des Filters 128 keine Schmutzteilchen in den Hochdruckzylinderraum 92 gelangen. Damit ist die Gefahr vermieden, daß die Dichtungen 136, 138 und die Lauffläche des Zylinders 76 durch Schmutzteilchen oder Späne vorzeitig abgenutzt werden könnten.

Der Druckmittelvorratsraum 94 ist durch eine Verschlußkappe 150 im wesentlichen luftdicht abgeschlossen. An der Innenseite der Verschlußkappe 150 ist ein Ausgleichsbalgen 152 angebracht, dessen Innenraum durch eine Bohrung 154 mit Atmosphäre verbunden ist. Der Druckmittelvorratsraum 94 wird vollständig mit Druckmittel, d.h. Hydrauliköl, gefüllt. Beim Aufsetzen der Verschlußkappe 150 bleibt die vollständige Füllung des Druckmittelvorratsraums 94 erhalten. Der Platzbedarf für das bei Verkleinerung des Hochdruckzylinderraums 92 in den Druckmittelvorratsraum 94 gelangende Druckmittel wird durch den Ausgleichsbalgen 152 erfüllt, indem sich dieser mehr oder minder zusammendrückt. Ebenso wird der Platzbedarf für etwa einleckende Luft durch den Ausgleichsbalgen 152 zur Verfügung gestellt. Die Luftpräsenz innerhalb des Druckmittelvorratsraums 94 ist deshalb auf ein Minimum reduziert; die etwa vorhandene Luft befindet sich unmittelbar unterhalb der Verschlußkappe 150.

Das Füllen der Einrichtung mit Druckmittel erfolgt bei geöffnetem Kanalsystem 116 in der Rechtsposition des Kolbens 60. Dabei steigt der Pegel des Druckmittels in allen Teilräumen gleichmäßig an. Lediglich in dem Bereich 127 unterhalb des Nachsaugventils 126 und in dem zum Überdruckventil 130 führenden Kanal 131 können sich Luftblasen festsetzen. Die Luftblase in dem Bereich 127 wird spätestens beim ersten Aus- und Einkuppelvorgang beseitigt, indem sie zunächst in den Hochdruckzylinderraum 92 gelangt und aus diesem bei der ersten Rechtsbewegung des Kolbens 60 ausgetrieben wird. Die Luftblase in dem Kanal 131 wird spätestens bei der ersten Öffnung des Überdruckventils 130 ausgetrieben. Um diese letztere Luftblase auszutreiben, kann man vorsehen, daß bei Inbetriebnahme eine willkürliche Öffnung des Überdruckventils 130 herbeigeführt wird.

Dadurch daß, wie oben beschrieben, über den Druckstab 62 wegen der kugelgelenkigen Lager 64, 66 und 68, 70 keine Querkräfte und keine Momente auf den Kolben 60 übertragen werden können, ist das Eindringen von Luft über die Sekundärdichtung 138 zusätzlich erschwert.

Durch die Verschlußkappe 150 kann kein Schmutz in das Druckmittel gelangen. Die Schnüffelbohrung 154 läßt allenfalls das Eindringen von Schmutz in den Innenraum des Ausgleichsbalgens 152 zu, der von dem Druckmittelvorratsraum 94 abgetrennt ist.

Da die ganze Hydraulikeinheit durch den Ausgleichsbalgen 152 flüssigkeitsdicht abgeschlossen ist, kann sie in jeder beliebigen Lage transportiert und montiert werden, und zwar im gefüllten Zustand.

Gemäß Figur 2 ist die Kolbenstange 96 auf ihrer ganzen Länge mit gleichbleibendem Querschnitt ausgeführt, d.h. insbesondere an der Stelle des Durchtritts durch die Dichtführung 108 und an der Stelle des Durchtritts durch das Trenndichtungssystem 132. Dies bedeutet, daß der Druck in dem Hochdruckzylinderraum 92 keine Kraftwirkung auf die Kolbenstange 96 ausübt.

Man könnte zum Ersatz des Überdruckventils 130 die Kolbenstange 96 auch als eine Differentialkolbenstange ausbilden, wie in der Figur 2 bei 156 angedeutet, d.h. man könnte den Kolbenstangenquerschnitt an der Stelle des Durchtritts durch die Dichtführung 108 kleiner machen als an der Stelle des Durchtritts durch das Trenndichtungssystem 132. Dann würde der Druck in dem Hochdruckzylinderraum 92 eine Kraftwirkung auf die Kolbenstange 96 nach rechts ausüben. Wenn der Druck in dem Hochdruckzylinderraum 92 während des Fahrbetriebs ein bestimmtes Maß übersteigt, so würde die Kolbenstange 96 gegen die Wirkung des auf seiner rechten Seite von Druckluft beaufschlagten Stellkolbens nach rechts verschoben und damit das Kanalsystem 118 geöffnet werden. Damit wäre eine Überdruckventilfunktion gewähr!eistet, ohne daß es eines besonderen Überdruckventils bedarf.

## Patentansprüche

1. Vorrichtung zum Aus- und Einschalten des Spiels zwischen den miteinander zu verbindenden Kupplungsteilen (14, 18), z. B. Kupplungsbolzen (14) und Zugöse (18), einer Anhängerkupplung, umfassend einen in einem Zylinder beweglichen Kolben (60) und einen von diesem Kolben (60) beaufschlagten Anlagekörper (50), wobei der Anlagekörper (50) durch eine Führungsstange (48) in einer Bohrung (46) einer einen Kupplungskörper (10) tragenden Zugstange (24) geführt ist, diese Zugstange (24) ihrerseits in einem an einem Fahrzeug befestigbaren Zugstangenlager (26) geführt ist und eine den Zylinder (76) umfassende Baueinheit (72) an diesem Zugstangenlager (26) derart befestigt ist, daß die Zylinderachse des Zylinders (60) annähernd in Flucht mit der Achse der Führungsstange (48) liegt, dadurch gekennzeichnet, daß zwischen dem Kolben (60) und dem kolbennahen Ende der Führungsstange (48) ein Druckstab (62) vorgesehen ist, welcher über je ein Kugelgelenk (64, 66) mit dem Kolben (60) und der Führungsstange (48) in Eingriff steht.

2. Vorrichtung nach Anspruch 1, dadurch gekennzeichnet, daß der Druckstab (62) an beiden Enden je eine Teilkugelfläche (64, 68) trägt und daß diese Teilkugelflächen (64, 68) mit je einer Kugelpfanne (66, 70) des Kolbens (60) und der Führungsstange (48) in Eingriff stehen.

3. Vorrichtung nach einem der Ansprüche 1 und 2, dadurch gekennzeichnet, daß der Druckstab (62) eine Zylinderabschlußwand (80) des Zylinders (76) durchsetzt und daß ein Balgen (78) mit seinem einen Ende (bei 82) an die Abschlußwand (80) angeschlossen ist und mit seinem anderen Ende (bei 84) den Druckstab (62) umschließt.

4. Vorrichtung nach Anspruch 3, dadurch gekennzeichnet, daß der Balgen (78) derart steif ausgebildet ist, daß er den Druckstab (62) in Flucht mit der Führungsstange (48) hält, wenn eines der Kugelgelenke (64, 66; 68, 70) gelöst ist.

5. Vorrichtung nach einem der Ansprüche 3 und 4, dadurch gekennzeichnet, daß der Balgen (78) der Bohrung (46) der Zugstange (24) anliegt.

6. Vorrichtung nach einem der Ansprüche 1 bis 5, dadurch gekennzeichnet, daß an dem Zugstangenlager (26) ein Zwischengehäuse (74) angeflanscht ist, welches eine die Zugstange (24) mit dem Zugstangenlager (26) verspannende Zugstangenmutter (30) und gegebenenfalls deren Zubehörteile (38, 40, 42) umschließt und daß an dem Zwischengehäuse (74) ein den Zylinder (76) aufnehmendes Hauptgehäuse (72) angeflanscht ist.

7. Vorrichtung nach Anspruch 6, dadurch gekennzeichnet, daß bei Ausbildung der Anhängerkupplung als Bolzenkupplung mit einem eine Zugöse (18) durchsetzenden Kupplungsbolzen (14) der Anlagekörper (50) zum Angriff an der Zugöse (18) ausgebildet ist derart, daß er einen Teil (56) einer Innenumfangsfläche der Zugöse (18) gegen die Außenumfangsfläche (58) des Kupplungsbolzens (14) andrückt.

8. Vorrichtung nach einem der Ansprüche 1 bis 7, dadurch gekennzeichnet, daß das Zugstangenlager (26) an einer Traverse (28) des die Kupplung tragenden Fahrzeugs angeflanscht ist.

9. Vorrichtung nach einem der Ansprüche 1 bis 8, dadurch gekennzeichnet, daß der Kolben (60) durch ein Stellgerät (98, 100) verstellbar ist und daß ein Hochdruckzylinderraum (92) des Zylinders (76), welcher sich beim Ausschalten des Spiels zwischen den Kupplungsteilen (14, 18) durch die Wirkung des Stellgeräts (98, 100) vergrößert, über ein Nachsaugventil (126), ein Schaltventil (108, 116) und gegebenenfalls ein Überdruckventil (130) mit einem Druckmittelvorratsraum (94) verbunden ist.

## Claims

1. Apparatus for eliminating and introducing play between the coupling parts (14, 18) to be connected to each other, for example coupling pin (14) and traction eye (18) of a trailer coupling, comprising a piston (60) able to move in a cylinder and a stop member (50) acted upon by this piston (60), the stop member (50) being guided by a guide rod (48) in a bore (46) of a drawbar (24) supporting a coupling member (10), this drawbar (24) in turn being guided in a drawbar bearing (26) able to be attached to a vehicle and a structural unit (72) comprising the cylinder (76) is fastened to this drawbar bearing (26) so that the axis of the cylinder (60) lies approximately in alignment with the axis of the guide rod (48), characterised in that provided between the piston (60) and the end of the guide rod (48) close to the piston is a compression member (62), which is in engagement with the piston (60) and the guide rod (48) respectively by way of a ball joint (64, 66).

2. Apparatus according to Claim 1, characterised in that at both ends the compression member (62) respectively supports a partial spherical surface (64, 68) and that these partial spherical surfaces (64, 68) are in engagement respectively with a ball socket (66, 70) of the piston (60) and of the guide rod (48).

3. Apparatus according to one of Claims 1 and 2, characterised in that the compression member (62) passes through a cylinder-closing wall (80) of the cylinder (76) and that bellows (78) are connected by one end (at 82) to the closing wall (80) and at their other end (at 84) surround the compression member (62).

4. Apparatus according to Claim 3, characterised in that the bellows (78) are constructed to be rigid so that they hold the compression member (62) in alignment with the guide rod (48), if one of the ball joints (64, 66; 68, 70) is released.

5. Apparatus according to one of Claims 3 and 4, characterised in that the bellows (78) bear against the bore (46) of the drawbar (24).

6. Apparatus according to one of Claims 1 to 5, characterised in that flange-mounted on the drawbar bearing (26) is an intermediate housing (74), which surrounds a drawbar nut (30) bracing the drawbar (24) with the drawbar bearing (26) and possibly its attachments (38, 40, 42) and that flange-mounted on the intermediate housing (74) is a main housing (72) receiving the cylinder (76).

7. Apparatus according to Claim 6, characterised in that if the trailer coupling is constructed as a pin coupling with a coupling pin (14) passing through a traction eye (18), the stop member (50) for engagement on the traction eye (18) is constructed so that it presses a part (56) of an inner peripheral surface of the traction eye (18) against the outer peripheral surface (58) of the coupling pin (14).

8. Apparatus according to one of Claims 1 to 7, characterised in that the drawbar bearing (26) is flange-mounted on a crossbar (28) of the vehicle supporting the coupling.

9. Apparatus according to one of Claims 1 to 8, characterised in that the piston (60) can be controlled by a control member (98, 100) and that a high pressure cylinder chamber (92) of the cylinder (76), which enlarges upon elimination of the play between the coupling parts (14, 18) due to the action of the control member (98, 100), is connected by way of a final suction valve (126), a switching valve (108, 116) and possibly an excess-pressure valve (130) to a pressure medium storage chamber (94).

## Revendications

1. Dispositif destiné à supprimer et à établir le jeu entre les parties de l'attelage (14, 18) à relier entre elles, par exemple une broche d'attelage (14) et un anneau de traction (18), d'un attelage de remorque, comportant un piston (60), se déplaçant dans un cylindre et un corps d'application (50), soumis à l'action de ce piston (60), le corps d'application (50) étant guidé par une barre de guidage (48) dans un trou (46) d'une barre de traction (24), portant un corps d'attelage (10), cette barre de traction (24) étant guidée de son côté dans un palier (26), à fixer sur un véhicule, et une unité de construction (72), comprenant le cylindre (76), étant fixée sur ce palier (26) de la barre de traction, de manière que l'axe du cylindre (60) soit sensiblement aligné avec l'axe de la barre de guidage (48), caractérisé en ce qu'il est prévu entre le piston (60) et l'extrémité proche du piston de la barre de guidage (48), une barre de pression (62) qui est en prise avec le piston (60) et avec la barre de guidage (48), respectivement par un joint sphérique (64) et un joint sphérique (66).

2. Dispositif selon la revendication 1, caractérisé en ce que la barre de pression (62) porte, à chacune de ses deux extrémités, une partie de surface sphérique (64, 68) et en ce que ces parties de surfaces sphériques (64, 68) sont en prise chacune avec un coussinet sphérique (66, 70) du piston (60) et de la barre de guidage (48).

3. Dispositif selon l'une des revendications 1 et 2, caractérisé en ce que la barre de pression (62) traverse une paroi de fermeture (80) du cylindre (76) et en ce qu'un soufflet (78) est raccordé, par l'une de ses extrémités (en 82), à la paroi de fermeture (80) et entoure, par son autre extrémité (en 84), la barre de pression (62).

4. Dispositif selon la revendication 3, caractérisé en ce que le soufflet (78) est suffisamment rigide pour maintenir la barre de pression (62) alignée avec la barre de guidage (48), lorsque l'un des joints sphériques (64, 66 ; 68, 70) est détaché.

5. Dispositif selon l'une des revendications 3 et 4, caractérisé en ce que le soufflet (78) s'applique contre le trou (46) de la barre de traction (24).

6. Dispositif selon l'une des revendications 1 à 5, caractérisé en ce qu'un boîtier intermédiaire (74) qui entoure un écrou (30), serrant la barre de traction (24), avec le palier (26) de la barre de traction et éventuellement ses accessoires (38, 40, 42), est bridé sur le palier (26) de la barre de traction et en ce qu'un boîtier principal (72), logeant le cylindre (76), est bridé sur le boîtier intermédiaire (74).

7. Dispositif selon la revendication 6, caractérisé en ce que dans le cas où l'attelage de remorque est configuré sous la forme d'un attelage à broche avec une broche d'attelage (14) traversant un anneau (18), le corps d'application (50), agissant sur l'anneau (18), est conçu de manière à presser une partie (56) d'une surface périphérique intérieure de l'anneau (18) contre la surface périphérique extérieure (58) de la broche d'attelage (14).

8. Dispositif selon l'une des revendications 1 à 7, caractérisé en ce que le palier (26) de la barre de traction est bridé sur une traverse (28) du véhicule portant l'attelage.

9. Dispositif selon l'une des revendications 1 à 8, caractérisé en ce que le piston (60) est réglable au moyen d'un dispositif de réglage (98, 100) et en ce qu'une chambre de cylindre à haute pression (92) du cylindre (76), qui est agrandie sous l'effet du dispositif de réglage (98, 100) lorsqu'est supprimé le jeu entre les parties de l'attelage (14, 18), est reliée à une chambre de réserve de fluide sous pression (94), par une soupape d'aspiration (126), une soupape de commutation (108, 116) et, le cas échéant, une soupape de surpression (130).
